# EUROPÄISCHE PATENTANMELDUNG

(11) **EP 2 584 232 A2**
(43) Veröffentlichungstag der Anmeldung: **24.04.2013**
(21) Anmeldenummer: 12006989.3
(22) Anmeldetag: 09.10.2012
(51) Int. Cl.: F16K 13/10, F16K 17/192, B65D 90/34

(54) **Vorrichtung zum Lagern von schütt-oder fließfähigen Produkten**

(30) Priorität: 20.10.2011 DE 102011116500
(71) Anmelder: Linde Aktiengesellschaft, 80331 München (DE)
(72) Erfinder: Riecker, Matthias, Shanghai 200135 (CN)
(74) Vertreter: Gellner, Bernd

(57) **Zusammenfassung**

Die Erfindung betrifft eine Vorrichtung zum Lagern von einem schütt- oder fließfähigen Produkt umfassend

- einen Vorratsbehälter (2) zur Aufnahme des Produktes, wobei in den Vorratsbehälter (2) zumindest eine Leitung (4, 5) zum Zuführen und Abführen des Produktes mündet,
- eine Siphoneinrichtung (3), die einen Siphonbehälter (14), der bis zu einem bestimmten Siphonniveau (18) mit einer Siphonflüssigkeit gefüllt ist, und ein Siphonrohr (19) aufweist, das sich von außerhalb des Siphonbehälters (14) in den Siphonbehälter (14) erstreckt und mit einem unteren Ende (20) unterhalb des Siphonniveaus (18) und mit dem anderen, oberen Ende (21) mit der Atmosphäre in kommunizierender Verbindung steht,
und
- die Siphoneinrichtung (3) kommunizierend mit dem Vorratsbehälter (2) verbunden ist, wobei die kommunizierende Verbindung oberhalb des Siphonniveaus (18) in den Siphonbehälter (14) und oberhalb eines maximalen Füllstandes des Vorratsbehälters (2) in den Vorratsbehälter (2) mündet und zumindest der Vorratsbehälter (2) zumindest teilweise mit einem Inertgas gefüllt ist.

## Beschreibung

Die Erfindung betrifft eine Vorrichtung zum Lagern von schütt- oder fließfähigen Produkten. Die Vorrichtung ist insbesondere zum Lagern von Nahrungsmitteln, Arzneimitteln oder Wirkstoffen für Arzneimittel in flüssiger Form vorgesehen, die in großen Vorratsbehältern inert gelagert werden sollen. Es soll jederzeit die Möglichkeit bestehen, Teile des gelagerten Produktes abzuziehen bzw. dem Vorratsbehälter Produkt zuzuführen.

Es gibt Vorratsbehälter, in welchem das Produkt mit einem Inertgas beaufschlagt wird. Der Druck im Vorratsbehälter wird mit einem Druckregelventil konstant gehalten, um eine sichere Beaufschlagung des Produktes mit Inertgas zu gewährleisten, selbst wenn dem Vorratsbehälter Produkt zu- oder abgeführt wird.

Derartige Über-/Unterdruckventile öffnen selbsttätig, wenn sich im Vorratsbehälter ein Druck aufbaut, der über einem vorbestimmten oberen Schwellwert liegt. Hierdurch kann Gas aus dem Vorratsbehälter in die Atmosphäre abweichen. Wenn der Druck im Vorratsbehälter unter einen vorbestimmten unteren Schwellwert sinkt, dann öffnet sich wiederum das Über-/Unterdruckventil und Luft kann in den Behälter eindringen, um so den Druck wieder herzustellen.

Derartige Über-/Unterdruckventile sind teuer und zudem fehleranfällig.

Es besteht ein erheblicher Bedarf, eine Vorrichtung zum Lagern von schütt- oder fließfähigen Produkten vorzusehen, die einfach aufgebaut ist und mit der ein bestimmter Druckbereich zuverlässig gehalten werden kann.

Bei Biogasanlagen werden Gärbehälter und Gasspeicher mit einer Überdruck- und Unterdrucksicherung versehen, die mit einem Flüssigkeitsverschluss ausgebildet ist. Eine solche Überdruck- und Unterdrucksicherung weist eine Verschlusskammer auf, in der sich im unteren Bereich eine Verschlussflüssigkeit befindet. In diese Verschlussflüssigkeit ist ein Rohr mit einem Ende eingetaucht, wobei das Rohr mit dem anderen Ende in der Atmosphäre mündet. Oberhalb des Flüssigkeitsspiegels der Verschlussflüssigkeit ist die Verschlusskammer mit einer Öffnung versehen, an der eine Leitung mündet, die zum Gärbehälter oder Gasspeicher führt. Stellt sich im Gärbehälter oder Gasspeicher ein Überdruck ein, so drückt dieser die Sperrflüssigkeit in das mit der Atmosphäre verbundene Tauchrohr, bis der Flüssigkeitsspiegel in der Sperrkammer bis zum unteren Ende des Tauchrohres absinkt und Gas durch das Tauchrohr in die Atmosphäre entweichen kann. Entsteht hingegen ein Unterdruck im Gärbehälter oder Gasspeicher, dann wird die Sperrflüssigkeit aus dem Tauchrohr abgesaugt, bis der Spiegel der Sperrflüssigkeit innerhalb des Tauchrohres im Bereich des unteren Endes des Tauchrohres angelangt. Hierdurch kann Luft aus der Atmosphäre durch das Tauchrohr in den Gärbehälter oder Gasspeicher gelangen. Somit erfolgt bei Über- oder Unterdruck ein Druckausgleich mit der Atmosphäre.

Der Erfindung liegt die Aufgabe zugrunde, eine Vorrichtung zum Lagern von schütt-oder fließfähigen Produkten zu schaffen, in welcher die Produkte über lange Zeit keimfrei gelagert werden können und es jederzeit möglich ist, ein Teil des Produktes abzuziehen bzw. neues Produkt hinzuzufügen.

Die Aufgabe wird mit einer Vorrichtung mit den Merkmalen des Anspruchs 1 gelöst. Vorteilhafte Ausgestaltungen der Erfindung sind in den Unteransprüchen angegeben.

Die erfindungsgemäße Vorrichtung zum Lagern eines schütt- oder fließfähigen Produktes umfasst
- einen Vorratsbehälter zur Aufnahme des Produktes, wobei in den Vorratsbehälter zumindest eine Leitung zum Zuführen und Abführen des Produktes mündet,
- eine Siphoneinrichtung, die einen Siphonbehälter, der bis zu einem bestimmten Siphonniveau mit einer Siphonflüssigkeit gefüllt ist, und ein Siphonrohr aufweist, das sich von außerhalb des Siphonbehälters in den Siphonbehälter erstreckt und mit einem unteren Ende unterhalb des Siphonniveaus mit dem anderen oberen Ende mit der Atmosphäre kommunizierend verbunden ist, und
- die Siphoneinrichtung kommunizierend mit dem Vorratsbehälter verbunden ist, wobei die kommunizierende Verbindung oberhalb des Siphonniveaus in den Siphonbehälter und oberhalb eines maximalen Füllstandes des Vorratsbehälters in den Vorratsbehälter mündet und zumindest der Vorratsbehälter zumindest teilweise mit einem Inertgas gefüllt ist.

Das Inertgas im Vorratsbehälter stellt sicher, dass das Produkt im Vorratsbehälter lange Zeit gelagert werden kann, ohne dass es durch eine chemische oder/und biologische Reaktion beeinträchtigt wird. Insbesondere wird verhindert, dass das Produkt mit Sauerstoff in Kontakt kommt und oxidiert, vergärt oder verfault. Daher ist die erfindungsgemäße Vorrichtung zum Lagern empfindlicher Produkte, wie zum Beispiel Nahrungsmittel, Arzneimittel oder Wirkstoffe für Arzneimittel geeignet.

Die Siphoneinrichtung erfüllt zwei Funktionen. Die eine Funktion ist die Absicherung eines vorbestimmen Innendruckes im Vorratsbehälter. Die andere Funktion ist der Abschluss des kommunizierenden Gasraumes im Vorratsbehälter und im Siphonbehälter gegenüber der Atmosphäre mittels der Siphonflüssigkeit. Hierdurch wird sichergestellt, dass der Gasaustausch mit der Atmosphäre gering bleibt, keine Turbulenzen in diesem Gasraum entstehen und das Produkt zuverlässig mit einer Inertgasblase abgedeckt wird. Diesbezüglich ist insbesondere von Vorteil, wenn das Inertgas eine sich von Luft unterscheidende Dichte aufweist, so dass sich ein Grenzbereich zwischen dem im Vorratsbehälter befindlichen Inertgas und der im Siphonbehälter befindlichen Luft ausbildet. Dieser Grenzbereich kann sowohl im Vorratsbehälter, als auch in einer Verbindungsleitung zwischen dem Vorratsbehälter und dem Siphonbehälter als auch im Siphonbehälter angeordnet sein.

Vorzugsweise ist die Inertgasmenge so bemessen, dass der Grenzbereich in einer Verbindungsleitung zwischen dem Vorratsbehälter und dem Siphonbehälter oder im Siphonbehälter befindet. Vorzugsweise ist die Dichte des Inertgases kleiner als die Dichte von Luft.

Die Verbindungsleitung zwischen dem Vorratsbehälter und dem Siphonbehälter weist vorzugsweise einen Abschnitt auf, der höher als das Niveau des Siphonbehälters ist. Dies heißt, dass der Abschnitt der Verbindungsleitung oberhalb einer oberen Deckenwandung des Siphonbehälters angeordnet ist. Ist das Inertgas leichter als Luft, dann wird vorzugsweise so viel Inertgas in die Vorrichtung eingefüllt, dass sich die Inertgasblase aus dem Vorratsbehälter bis zu diesem oberhalb des Niveaus des Siphonbehälters liegenden Abschnittes der Verbindungsleitung erstreckt. Befindet sich Luft im Siphonbehälter, dann kann die Luft, die schwerer als das Inertgas ist, nicht durch diesen Leitungsabschnitt hindurch nach oben in die Inertgasblase eindringen. Die Grenzschicht zwischen dem Inertgas und der Luft bildet sich dann in diesem Abschnitt der Verbindungsleitung aus. Hierdurch wird sichergestellt, dass das Produkt nicht mit Luft in Kontakt kommt.

Wird hingegen ein Inertgas verwendet, das eine größere Dichte als Luft aufweist, dann ist es zweckmäßig, einen Abschnitt der Verbindungsleitung vorzusehen, der ein höheres Niveau als der Vorratsbehälter aufweist, d.h., dass dieser Abschnitt oberhalb einer oberen Deckenwandung des Vorratsbehälters angeordnet ist.

Das Inertgas ist vorzugsweise ein Gas oder eine Gaszusammensetzung mehrerer der Gase der Gruppe, Argon, Helium und Stickstoff.

Im Siphonrohr kann ein Filter, insbesondere ein Kohlefilter, angeordnet sein, so dass das Eindringen von Keimen und Bakterien in den Siphonbehälter vermieden wird.

Die Siphonflüssigkeit ist vorzugsweise Wasser, insbesondere ein keimfreies, zum Beispiel ionisiertes Wasser.

Die erfindungsgemäße Vorrichtung wird vor allem zur Lagerung von Lebensmittel, Arzneimittel oder Wirkstoffen für Arzneimittel verwendet.

Die Erfindung wird nachfolgend beispielhaft näher anhand der Zeichnungen erläutert. Die Zeichnungen zeigen in:
- Fig. 1: die erfindungsgemäße Vorrichtung in einem schematischen Blockdiagramm,
- Fig. 2: die Vorrichtung aus Fig. 1 bei Überdruck,
- Fig. 3: die Vorrichtung aus Fig. 1 bei Unterdruck,
- Fig. 4: einen Siphonbehälter im Teilschnitt,
- Fig. 5: einen weiteren Siphonbehälter im Teilschnitt, und
- Fig. 6: ein weiteres Ausführungsbeispiel einer erfindungsgemäßen Vorrichtung in einem schematischen Blockdiagramm.

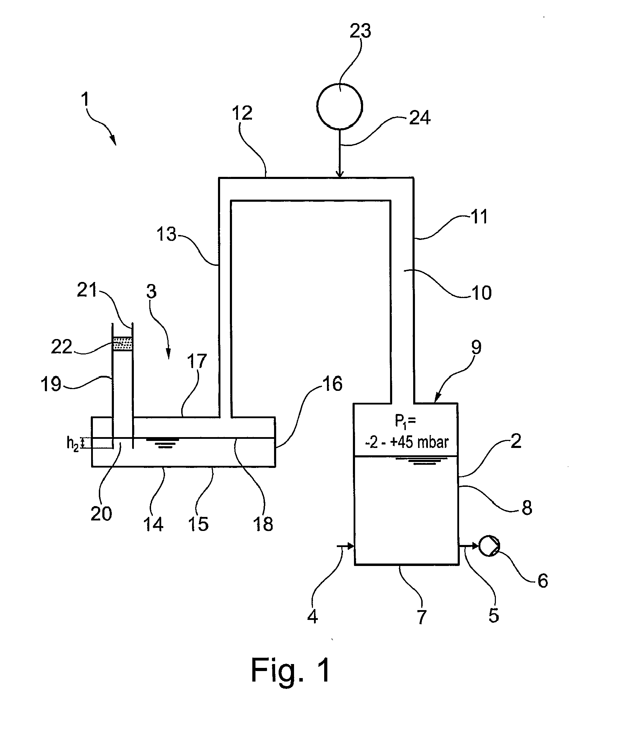

Die erfindungsgemäße Vorrichtung 1 zum Lagern von schütt- oder fließfähigen Produkten weist einen Vorratsbehälter 2 zur Aufnahme des Produktes sowie eine Siphoneinrichtung 3 auf. Eine solche Lagervorrichtung 1 ist schematisch grob vereinfacht und nicht maßstabsgetreu in Fig. 1 dargestellt.

Der Vorratsbehälter 2 weist eine Zuführleitung 4 auf, mit welcher ein Produkt dem Vorratsbehälter zugeführt werden kann. Das Produkt ist vorzugsweise schütt- oder fließfähig. Es ist insbesondere eine Flüssigkeit. Am Vorratsbehälter 2 mündet eine Abführleitung 5, mit welcher das Produkt aus dem Vorratsbehälter 2 entnommen werden kann. In der Abführleitung 5 ist eine Förderpumpe 6 angeordnet.

Der Vorratsbehälter 2 ist typischerweise als Edelstahlbehälter mit einer Bodenwandung 7, Seitenwandungen 8 und einer Deckenwandung 9 ausgebildet. In der Deckenwandung ist eine Durchgangsöffnung vorgesehen, in welche eine Verbindungsleitung 10 mündet, die zur Siphoneinrichtung 3 führt. Die Verbindungsleitung 10 erstreckt sich mit einem ersten Abschnitt 11 von der Deckenwandung 9 des Vorratsbehälters 2 und geht dann in einen horizontalen zweiten Abschnitt 12 über, von dem dann die Verbindungsleitung 10 mit einem nach unten führenden dritten Abschnitt 13 sich bis zur Siphoneinrichtung 3 erstreckt.

Die Siphoneinrichtung 3 weist einen Siphonbehälter 14 mit einer Bodenwandung 15, Seitenwandungen 16 und einer Deckenwandung 17 auf. Der dritte Abschnitt 13 der Verbindungsleitung 10 mündet mit seinem unteren Ende an der Deckenwandung 17 des Siphonbehälters 14. Der Siphonbehälter 14 ist somit mit dem Vorratsbehälter 2 über die Verbindungsleitung 10 kommunizierend verbunden.

Der Siphonbehälter 14 ist bis zu einem vorbestimmten Siphonniveau 18 mit einer Siphonflüssigkeit gefüllt. Im vorliegenden Ausführungsbeispiel ist die Siphonflüssigkeit Wasser, insbesondere ein keimfreies, vorzugsweise ionisiertes Wasser. Ein Siphonrohr 19 erstreckt sich in vertikaler Richtung durch die Deckenwandung 17 des Siphonbehälters 14 hindurch. Das Siphonrohr 19 weist ein unteres Ende 20 und ein oberes Ende 21 auf. Das untere Ende 20 ist unterhalb des Siphonniveaus 18 angeordnet. Das obere Ende 21 ist außerhalb des Siphonbehälters 14 angeordnet und endet in der Atmosphäre, so dass Luft in das Siphonrohr 19 von oben eintreten kann.

Am oberen Endbereich des Siphonrohrs 19 ist ein Filter 22 angeordnet. Im vorliegenden Ausführungsbeispiel ist der Filter 22 ein Kohlefilter, der Keime und Bakterien aus der durch das Siphonrohr 19 strömenden Luft filtert.

Eine Inertgasquelle 23 ist mit einer Leitung 24 mit der Verbindungsleitung 10 verbunden, um der Vorrichtung 1 zuzuführen. Die Leitung 24 mündet vorzugsweise an der höchsten Stelle der Verbindungsleitung, wenn das Inertgas leichter als Luft ist, um bei der Inbetriebnahme Luft aus der Verbindungsleitung 10 und dem Vorratsbehälter 2 verdrängen zu können.

Nachfolgend wird der Betrieb der oben beschriebenen Lagervorrichtung 1 erläutert:

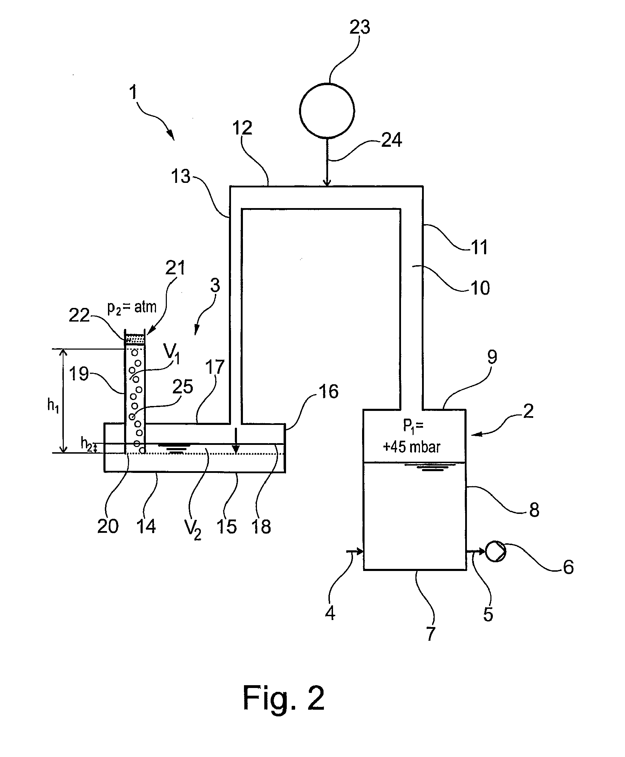

Fig. 2 zeigt die Lagervorrichtung 1, wobei das im Vorratsbehälter 2, in der Verbindungsleitung 10 und im Siphonbehälter 14 befindliche Gas den maximal möglichen Druck aufweist. Der Raum im Siphonbehälter oberhalb des Flüssigkeitsspiegels der Siphonflüssigkeit, im Verbindungsrohr und im Vorratsbehälter oberhalb des Produktes ist mit Inertgas und ggfs. Luft gefüllt. Daher wird dieser Raum im Folgenden als Gasraum bezeichnet.

Da das Gas im Gasraum den maximal möglichen Druck aufweist, wird der Spiegel der Siphonflüssigkeit im Siphonbehälter 14 gegenüber dem Siphonniveau 18 abgesenkt. Ein Teil der Siphonflüssigkeit wird durch den Druck des Gases im Siphonrohr 19 nach oben gedrückt. Der Siphonspiegel ist im Siphonbehälter 14 mit Ausnahme des Siphonrohrs 19 so weit abgesenkt, dass der Siphonspiegel am unteren Ende 20 des Siphonrohrs 19 liegt. Hierdurch kann Gas durch das untere Ende 20 in das Siphonrohr 19 eintreten und in die Atmosphäre entweichen. Dies ist in Fig. 2 schematisch durch Gasblasen 25 in der Siphonflüssigkeit im Siphonrohr 19 dargestellt.

Das Volumen der im Siphonrohr 19 aufgenommenen Flüssigkeit V₁ ist gleich dem Volumen der im Siphonbehälter 14 mit Ausnahme des Siphonrohrs 19 verdrängten Symphonflüssigkeit V₂. Hierdurch stellt sich eine vorbestimmte Höhe h₁ im Siphonrohr 19 der Flüssigkeitssäule ein, die durch die Querschnittsfläche des Siphonrohrs 19 und die Grundfläche bzw. Querschnittsfläche des Siphonbehälters 14 und dem Abstand zwischen dem Siphonniveau 18 und dem unteren Ende 20 des Siphonrohrs 19 festgelegt ist. Diese Höhe der Flüssigkeitssäule bestimmt den maximalen Druck der in dem in der Lagervorrichtung 1 enthaltenen Gas anliegen kann. Durch die Parameter Querschnittsfläche des Siphonrohrs 19, Abstand zwischen dem Siphonniveau 18 und dem unteren Ende 20 des Siphonrohrs 19 und Querschnittsfläche des Siphonbehälters 14 wird somit der maximal mögliche Druck in der Lagervorrichtung 1 eindeutig definiert.

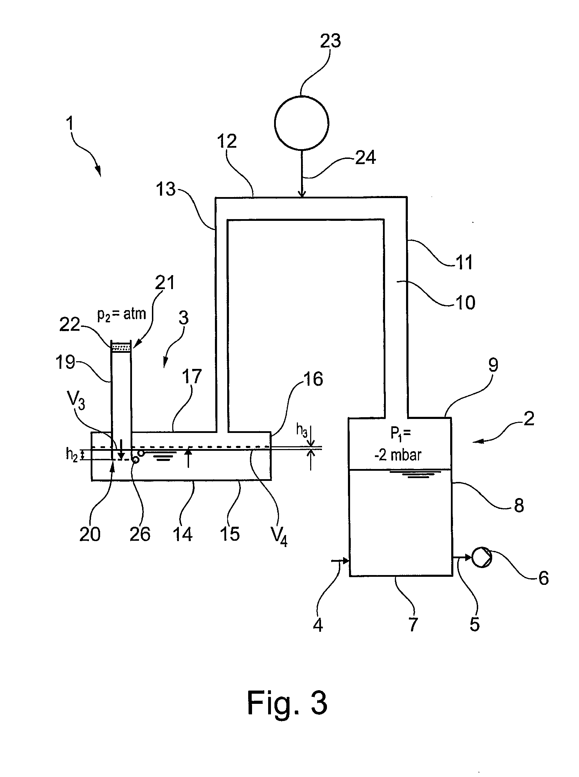

Besteht in der Lagervorrichtung 1 ein Unterdruck im Vergleich zum Atmosphärendruck, dann senkt der Atmosphärendruck die Flüssigkeitssäule im Siphonrohr 19 ab (Fig. 3). Bei einem maximalen Unterdruck ist die Flüssigkeitssäule im Siphonrohr bis zum unteren Ende 20 des Siphonrohrs 19 abgesenkt, so dass Luft aus der Atmosphäre durch das Siphonrohr 19 in den Siphonbehälter 14 eindringen kann. Dies ist in Fig. 3 schematisch durch die Gasblasen 26 dargestellt.

Durch das Verdrängen der Siphonflüssigkeit aus dem Siphonrohr 19 wird der Spiegel der Siphonflüssigkeit gegenüber dem Siphonniveau 18 auf eine vorbestimmte Höhe h₃ angehoben. Das Volumen der aus dem Siphonrohr 19 verdrängten Flüssigkeit V₃ entspricht dem Volumen V₄ der Siphonflüssigkeit im Siphonbehälter 14 mit Ausnahme des Siphonrohrs 19 im Bereich zwischen dem Siphonniveau 18 und dem Siphonspiegel bei der Höhe h₃. Dieses Volumen ist durch die Parameter der Querschnittsfläche des Siphonrohrs 19, der Querschnittsfläche des Siphonbehälters 14 und der Höhe zwischen dem Siphonniveau 18 und dem unteren Ende 20 des Siphonrohrs 19 festgelegt. Dieses Volumen korreliert mit der Höhe h₃, um die der Spiegel der Siphonflüssigkeit gegenüber dem Siphonniveau 18 angehoben wird. Der Höhenunterschied zusammengesetzt aus der Höhe h₃ und der Höhe h₂ bestimmt den maximal notwendigen Druck zum Zuführen von Luft aus der Atmosphäre in die Lagervorrichtung 1. Somit ist der maximale Unterdruck bzw. minimale Druck in der Lagervorrichtung 1 durch diese Parameter eindeutig festlegbar.

Das vorliegende Ausführungsbeispiel ist derart ausgebildet, dass sich bei Überdruck eine Flüssigkeitssäule h₁ im Siphonrohr 19 mit 458,7 mm einstellt. Dies entspricht einem Druck von 4500 Pa bzw. 45 mbar(ü).

Mit der Höhe h₂ + h₃ kann ein vorbestimmter maximaler Unterdruck eingestellt werden. Aufgrund der großen Fläche des Siphonbehälters ist die Höhe h₃ wesentlich kleiner als die Höhe h₂, weshalb näherungsweise die Höhe h₃ vernachlässigt werden kann. Im vorliegenden Ausführungsbeispiel ist die Höhe auf 20,4 mm eingestellt, wodurch ein maximaler Unterdruck von 200 Pa (2 mbar(ü)) bewirkt wird.

Bei Inbetriebnahme der Lagervorrichtung 1 wird aus der Inertgasquelle 23 über die Leitung 24 der Verbindungsleitung 10 und dem Vorratsbehälter 2 Inertgas zugeführt.

Das Inertgas, das vorzugsweise leichter als Luft ist, verdrängt die Luft nach unten. Hierbei ist die Abführleitung 5 im Vorratsbehälter 2 geöffnet, so dass die Luft nach außen entweichen kann. Wird die Abführleitung 5 geschlossen, dann wird Luft aus der Verbindungsleitung und aus dem Siphonbehälter durch das Siphonrohr 19 verdrängt. Die in der Lagervorrichtung 1 enthaltene Luft kann fast vollständig vom Inertgas verdrängt werden. Es ist jedoch nicht notwendig, dass aus dem Siphonbehälter 14 die Luft vollständig verdrängt wird. Es genügt vollkommen, dass sich eine Grenzschicht zwischen dem Inertgas und der Luft im Bereich des vertikalen dritten Abschnitts 13 der Verbindungsleitung 10 einstellt. Bei Druckschwankungen aufgrund eines sich verändernden Füllungsstandes im Vorratsbehälter 2 verändert sich lediglich die Position dieser Grenzfläche im Bereich des vertikalen, dritten Abschnitts 13 der Verbindungsleitung 10. Vorzugsweise ist der dritte Abschnitt 13 der Verbindungsleitung mit einem großen Querschnitt bzw. als großvolumiger Hohlkörper ausgebildet, so dass auch bei einem Gasaustausch mit der Umgebung sichergestellt ist, dass die Grenzschicht zwischen dem Inertgas und der Luft nicht aus dem Bereich des vertikalen dritten Abschnitts 13 der Verbindungsleitung 10 gelangen kann.

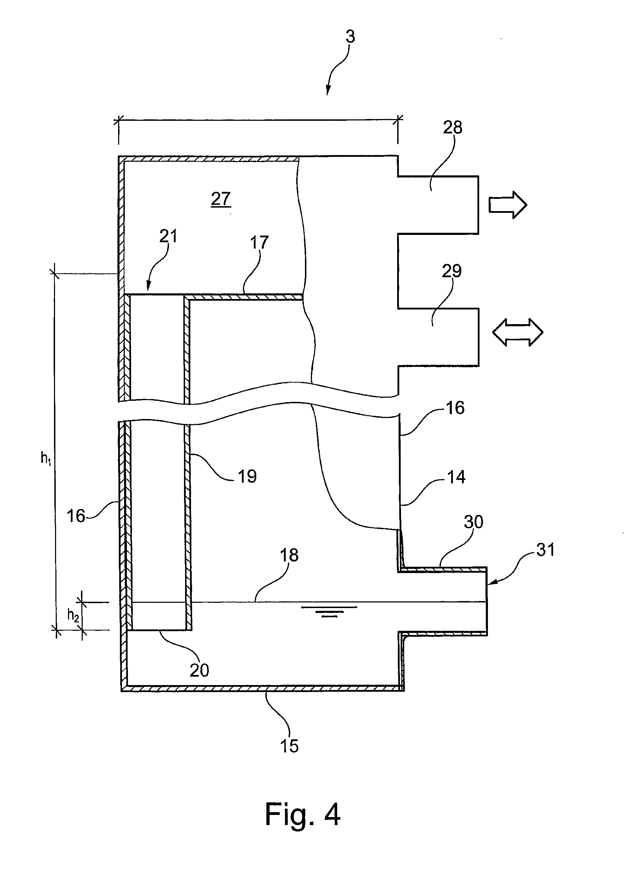

Fig. 4 zeigt eine Siphoneinrichtung 3 für eine erfindungsgemäße Lagervorrichtung. Der Siphonbehälter 14 weist eine Bodenwandung 15, Seitenwandungen 16 und eine Deckenwandung 17 auf. Das Siphonrohr 19 erstreckt sich von der Deckenwandung 17 nach unten und weist ein unteres Ende 20 und ein oberes Ende 21 auf. Im vorliegenden Ausführungsbeispiel ist das obere Ende 21 bündig zur Deckenwandung 17 des Siphonbehälters 14. Oberhalb der Deckenwandung 17 ist eine Kammer 27 vorgesehen, die die gleiche Querschnittsfläche wie der Siphonbehälter 14 aufweist und die seitlich eine Öffnung besitzt, an welcher ein Rohrstutzen 28 sitzt, der offen ist, so dass Atmosphärenluft in den Rohrstutzen 28 eindringen kann. Im Rohrstutzen 28 befindet sich der Filter (nicht dargestellt in Fig. 4). Unterhalb der Kammer 27 ist an der Seitenwandung 16 benachbart zur Deckenwandung 17 eine Öffnung vorgesehen, auf welcher ein weiterer Rohrstutzen 29 sitzt. Dieser Rohrstutzen 29 ist vorgesehen, um mit einer Verbindungsleitung, die zu einem Vorratsbehälter führt, verbunden zu werden, so dass durch den Rohrstutzen 29 in den Siphonbehälter 14 bei Überdruck im Vorratsbehälter Gas eindringen kann bzw. bei Unterdruck im Vorratsbehälter Gas aus dem Siphonbehälter 14 in den Vorratsbehälter entweichen kann. Der Siphonbehälter 14 ist bis zum Siphonniveau 18 mit Siphonflüssigkeit gefüllt. Etwa auf Höhe des Siphonniveaus mündet ein weiterer Rohrstutzen 30 am Siphonbehälter 14, der zu einer Sichtscheibe 31 führt, durch welche der Flüssigkeitsspiegel der Siphonflüssigkeit erkannt werden kann.

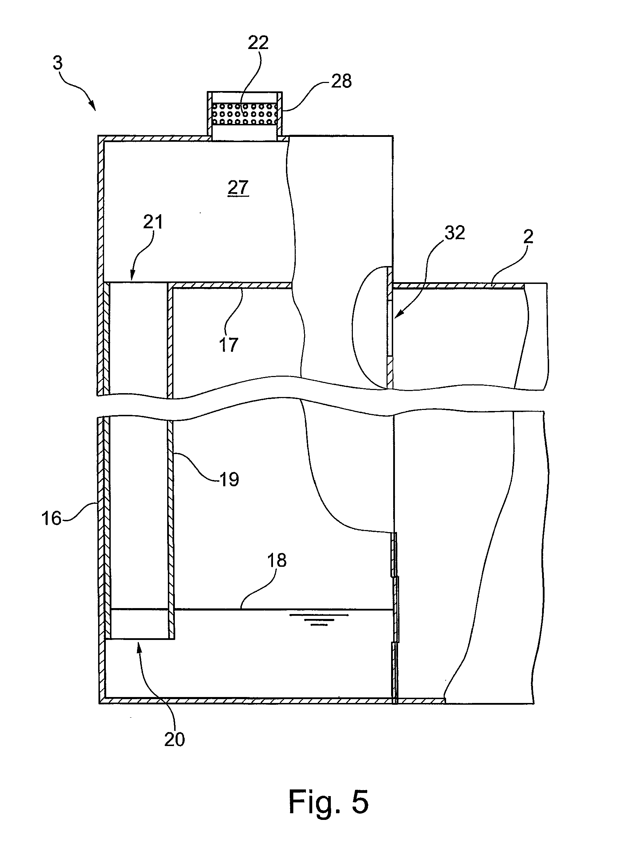

Fig. 5 zeigt ein weiteres Ausführungsbeispiel einer Siphoneinrichtung 3, die ähnlich wie die Siphoneinrichtung aus Fig. 4 ausgebildet ist, weshalb gleiche Teile mit gleichen Bezugszeichen versehen sind. Der Rohrstutzen 28, der mit der Atmosphäre in Verbindung steht, ist an der oberen Deckenwandung und der Kammer 27 ausgebildet. Der Rohrstutzen 29 gemäß Fig. 4 entfällt, da die Siphoneinrichtung 3 unmittelbar angrenzend am Vorratsbehälter 2 angeordnet ist und mit diesem lediglich über eine Öffnung 32 kommuniziert. Die Verbindungsleitung der oben erläuterten Ausführungsformen entfällt bei diesem Ausführungsbeispiel.

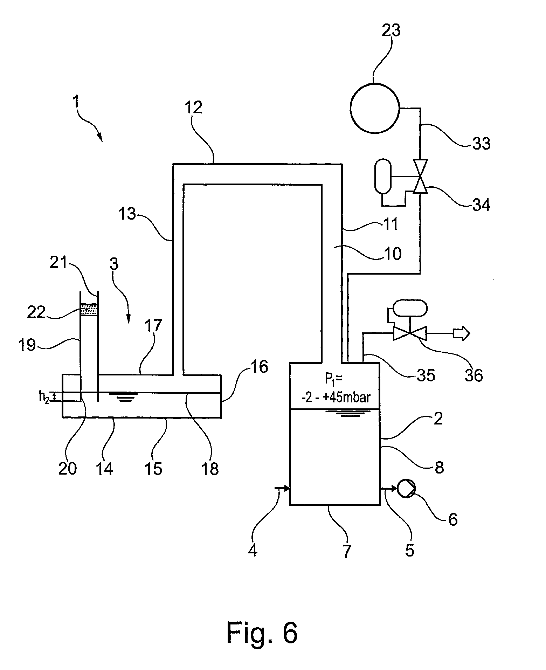

Fig. 6 zeigt ein weiteres Ausführungsbeispiel einer erfindungsgemäßen Lagervorrichtung 1. Die Lagervorrichtung gemäß Fig. 6 ist ähnlich wie die in Fig. 1 gezeigte Lagervorrichtung ausgebildet, weshalb gleiche Teile mit gleichen Bezugszeichen bezeichnet sind und nicht nochmals erläutert werden. Auch diese Lagervorrichtung weist einen Siphonbehälter 14 auf, der im Gegensatz zur Ausführungsform nach Fig. 1 jedoch hier nur als Über-/Unterdruck-Sicherheitsventil dient. Die Inertgasquelle 23 ist bei der Ausführungsform nach Fig. 6 über eine bzgl. der Verbindungsleitung 10 separat geführte Leitung 33 mit dem Vorratsbehälter 2 verbunden. In der Leitung 33 ist ein Druckverminderungsventil 34 angeordnet, das den in der Quelle 23 bestehenden Druck im Inertgas auf das im Vorratsbehälter 2 gewünschte Druckniveau herabsetzt. Es kann auch zweckmäßig sein, zwei Druckminderungsventile aufeinander folgend in der Leitung 33 anzuordnen, um den Druck stufenweise herabzusetzen.

Der Vorratsbehälter 2 ist mit einer weiteren Leitung 35 verbunden, in der ein Überdruckventil 36 angeordnet ist. Das Überdruckventil 36 ist derart ausgebildet, dass es bei einem vorbestimmten Druck im Vorratsbehälter 2 selbsttätig öffnet und Gas in die Atmosphäre entweichen kann.

Über die Leitungen 33 und 35 wird somit dem Vorratsbehälter 2 Inertgas je nach Bedarf zu- oder abgeführt. Die Siphoneinrichtung 3 bildet hierbei ein Über-/Unterdruck-Sicherheitsventil, falls eines der Ventile in den Leitungen 33, 35 inbesondere das Überdruckventil 36 nicht korrekt funktionieren sollte. Die Siphoneinrichtung 3 ist ein sehr einfaches, zuverlässiges und kostengünstiges Sicherheitsventil, das weder eine Stromzufuhr benötigt, noch bewegliche mechanische Teile aufweist. Lediglich das Siphonniveau 18 muss in regelmäßigen Abständen kontrolliert werden.

Das Ausführungsbeispiel nach Fig. 1 unterscheidet sich von demjenigen nach Fig. 6 dadurch, dass die gesamte Zu- und Abfuhr des Inertgases über die Verbindungsleitung 10 erfolgt, wobei die Siphoneinrichtung gleichzeitig die Funktion des Sicherheitsventils als auch des Überdruckventils 36 inne hat. Die Ausführungsform nach Fig. 1 ist vor allem dann zweckmäßig, wenn die Menge an zu- und abzuführendem Inertgas eher gering ist. Bei größerer auszutauschender Inertgasmenge ist das Ausführungsbeispiel nach Fig. 6 vorteilhaft.

### Bezugszeichenliste

- 1: Lagervorrichtung
- 2: Vorratsbehälter
- 3: Siphoneinrichtung
- 4: Zuführleitung
- 5: Abführleitung
- 6: Förderpumpe
- 7: Bodenwandung
- 8: Seitenwandung
- 9: Deckenwandung
- 10: Verbindungsleitung
- 11: erster Abschnitt
- 12: zweiter Abschnitt
- 13: dritter Abschnitt
- 14: Siphonbehälter
- 15: Bodenwandung
- 16: Seitenwandung
- 17: Deckenwandung
- 18: Siphonniveau
- 19: Siphonrohr
- 20: unteres Ende
- 21: oberes Ende
- 22: Filter
- 23: Inertgasquelle
- 24: Leitung
- 25: Gasblase
- 26: Gasblase
- 27: Kammer
- 28: Rohrstutzen
- 29: Rohrstutzen
- 30: Rohrstutzen
- 31: Sichtscheibe
- 32: Öffnung
- 33: Leitung
- 34: Verminderungsventil
- 35: Leitung
- 36: Überdruckventil

## Patentansprüche

1. Vorrichtung zum Lagern von einem schütt- oder fließfähigen Produkt umfassend
- einen Vorratsbehälter (2) zur Aufnahme des Produktes, wobei in den Vorratsbehälter (2) zumindest eine Leitung (4, 5) zum Zuführen und Abführen des Produktes mündet,
- eine Siphoneinrichtung (3), die einen Siphonbehälter (14), der bis zu einem bestimmten Siphonniveau (18) mit einer Siphonflüssigkeit gefüllt ist, und ein Siphonrohr (19) aufweist, das sich von außerhalb des Siphonbehälters (14) in den Siphonbehälter (14) erstreckt und mit einem unteren Ende (20) unterhalb des Siphonniveaus (18) und mit dem anderen, oberen Ende (21) mit der Atmosphäre in kommunizierender Verbindung steht,
und
- die Siphoneinrichtung (3) kommunizierend mit dem Vorratsbehälter (2) verbunden ist, wobei die kommunizierende Verbindung oberhalb des Siphonniveaus (18) in den Siphonbehälter (14) und oberhalb eines maximalen Füllstandes des Vorratsbehälters (2) in den Vorratsbehälter (2) mündet und zumindest der Vorratsbehälter (2) zumindest teilweise mit einem Inertgas gefüllt ist.

2. Vorrichtung nach Anspruch 1, **dadurch gekennzeichnet, dass** das Siphonrohr mit dem oberen Ende außerhalb des Siphonbehälters (14) angeordnet ist.

3. Vorrichtung nach Anspruch 1 oder 2, **dadurch gekennzeichnet, dass** der Druck des Inertgases innerhalb eines vorbestimmten Bereiches liegt, wobei die untere Grenze des Druckbereiches unterhalb des Atmosphärendruckes und die obere Grenze des Druckbereichs oberhalb des Atmosphärendruckes liegt.

4. Vorrichtung nach einem der Ansprüche 1 bis 3, **dadurch gekennzeichnet, dass** die kommunizierende Verbindung zwischen dem Vorratsbehälter (2) und dem Siphonbehälter (14) mittels einer Verbindungsleitung (10) ausgebildet ist, wobei vorzugsweise zumindest ein Abschnitt (12) der Verbindungsleitung (10) ein höheres Niveau als der Siphonbehälter (14) aufweist.

5. Vorrichtung nach Anspruch 4, **dadurch gekennzeichnet, dass** der Siphonbehälter (14) eine Deckenwandung (17) aufweist und der Vorratsbehälter (2) eine Deckenwandung (9) aufweist, und die Verbindungsleitung (10) zumindest an einer der beiden Deckenwandungen (9, 17) und vorzugsweise an beiden Deckenwandungen (9, 17) mündet.

6. Vorrichtung nach Anspruch 4 oder 5, **dadurch gekennzeichnet, dass** das Inertgas eine sich von Luft unterscheidende Dichte aufweist, so dass sich ein Grenzbereich zwischen dem im Vorratsbehälter (2) befindlichen Inertgas und im Siphonbehälter (14) befindlicher Luft ausbildet.

7. Vorrichtung nach einem der Ansprüche 1 bis 6, **dadurch gekennzeichnet, dass** das Inertgas ein Gas oder eine Gaszusammensetzung mehrerer der Gase der Gruppe, Argon, Helium oder Stickstoff ist.

8. Vorrichtung nach einem der Ansprüche 1 bis 7, **dadurch gekennzeichnet, dass** die Siphonflüssigkeit Wasser und insbesondere ionisiertes Wasser ist.

9. Vorrichtung nach einem der Ansprüche 1 bis 8, **dadurch gekennzeichnet, dass** ein Sichtfenster (31) am Siphonbehälter (14) in Höhe des Siphonniveaus (18) angeordnet ist.

10. Vorrichtung nach einem der Ansprüche 1 bis 9, **dadurch gekennzeichnet, dass** im Siphonrohr (19) ein Filter (22), insbesondere ein Kohlefilter angeordnet ist.

11. Vorrichtung nach einem der Ansprüche 1 bis 10, **dadurch gekennzeichnet, dass** eine Inertgasquelle (23) vorgesehen ist, die an die kommunizierende Verbindung (10) zwischen der Siphoneinrichtung (3) und dem Vorratsbehälter (2) angeschlossen ist, um Inertgas mit einem vorbestimmten Druck zuzuführen.

12. Vorrichtung nach einem der Ansprüche 1 bis 10, **dadurch gekennzeichnet, dass** eine Inertgasquelle (23) vorgesehen ist, die direkt an den Vorratsbehälter (2) angeschlossen ist, um diesen Inertgas mit einem vorbestimmten Druck zuzuführen.

13. Vorrichtung nach Anspruch 12, **dadurch gekennzeichnet,**
**dass** eine Leitung (35) mit dem Vorratsbehälter (2) verbunden ist, in welcher ein Überdruckventil (36) angeordnet ist und die in der Atmosphäre mündet.

14. Verwendung einer Vorrichtung nach einem der Ansprüche 1 bis 13 zur Lagerung von Lebensmittel, Arzneimittel oder Wirkstoffen für Arzneimittel.
